# EUROPÄISCHE PATENTSCHRIFT

(11) **EP 4 111 852 B1**
(45) Veröffentlichungstag und Bekanntmachung des Hinweises auf die Patenterteilung: **20.03.2024**
(21) Anmeldenummer: 22176735.3
(22) Anmeldetag: 01.06.2022
(51) Int. Cl.: A01G 25/16

(54) **STEUERUNGSSYSTEM MIT EINER PUMPE FÜR EINE BEWÄSSERUNGSANLAGE**
CONTROL SYSTEM WITH A PUMP FOR AN IRRIGATION SYSTEM
SYSTÈME DE COMMANDE DOTÉ D'UNE POMPE POUR UNE INSTALLATION D'IRRIGATION

(30) Priorität: 23.06.2021 DE 202021103366 U
(43) Veröffentlichungstag der Anmeldung: 04.01.2023
(73) Patentinhaber: Einhell Germany AG, 94405 Landau / Isar (DE)
(72) Erfinder: THANNHUBER, Markus, 94405 Landau (DE)
(74) Vertreter: Hofstetter, Schurack & Partner

(56) Entgegenhaltungen:
- DE-U1-202019 104 581
- US-A1- 2020 305 365
- US-B2- 7 400 944

## Beschreibung

Die vorliegende Erfindung betrifft ein Steuerungssystem für eine Bewässerungsanlage und eine Bewässerungsanlage mit einem solchen Steuerungssystem.

Systeme zur automatischen Steuerung der Bewässerung von Pflanzen sind an sich bekannt. Solche Steuerungen, die mitunter auch als Bewässerungscomputer bezeichnet werden, können beispielsweise zwischen eine Wasserleitung und eine Vorrichtung zur Wasserausbringung, beispielsweise einen Sprinkler oder dergleichen, angeordnet werden. Der Bewässerungscomputer kann beispielsweise batteriebetrieben sein und eine Steuerung aufweisen, die über entsprechende Eingabeschnittstellen des Bewässerungscomputers manuell durch einen Benutzer programmiert werden kann, um eine zeitabhängige automatische Bewässerung zu realisieren.

Dokument DE 20 2019 104 581 U1 beschreibt eine Vorrichtung zum automatisierten Pflegen von Pflanzen mit einem oberen Gehäuseteil, das einen Pflanzbehälter zur Aufnahme einer Pflanze umfasst, mit einem unterhalb des oberen Gehäuseteils angeordneten unteren Gehäuseteil, das ein Wasserreservoir zur Aufnahme von Wasser umfasst, und mit einem mittleren Gehäuseteil, das zwischen dem oberen Gehäuseteil und dem unteren Gehäuseteil angeordnet ist, wobei das mittlere Gehäuseteil eine Steuereinheit zur Steuerung der Pflege der Pflanze aufweist. Das untere Gehäuseteil umfasst eine als Wasserpumpe ausgebildete Fördereinrichtung, die über einen Schlauch mit dem mittleren Gehäuseteil verbunden ist. Das von der Fördereinrichtung geförderte Wasser kann durch den Schlauch an ein Pflanzsubstrat abgegeben werden.

Es ist eine Aufgabe der vorliegenden Erfindung, eine Möglichkeit zur automatischen Steuerung einer Bewässerungsanlage anzugeben, durch welche der Benutzer flexibler und insbesondere ortsungebunden auf die Steuerung Einfluss nehmen kann. Insbesondere soll der Benutzerkomfort dadurch erhöht werden.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Gemäß einem Aspekt der Erfindung wird ein Steuerungssystem für eine Bewässerungsanlage angegeben. Das Steuerungssystem weist einen Zuflussanschluss und einen Abflussanschluss auf sowie eine Pumpe mit einem elektrisch steuerbaren Pumpenmotor, wobei die Pumpe insbesondere zwischen dem Zuflussanschluss und dem Abflussanschluss angeordnet und dazu eingerichtet ist, eine Flüssigkeit von dem Zuflussanschluss zu dem Abflussanschluss zu pumpen. Das Steuerungssystem weist einen Steuerschaltkreis auf, der dazu eingerichtet ist, einen Steuerbefehl zu erhalten, insbesondere von einem externen Rechensystem, und den Pumpenmotor abhängig von dem Steuerbefehl zu aktivieren oder zu deaktivieren. Das Steuerungssystem weist ein Pumpengehäuse auf, innerhalb dessen die Pumpe, insbesondere der Pumpenmotor, angeordnet ist. Das Steuerungssystem weist außerdem einen elektrischen Energiespeicher auf. Der elektrische Energiespeicher weist wenigstens eine elektrische Energiespeicherzelle auf, die zur Energieversorgung, insbesondere des Steuerschaltkreises und/oder des Pumpenmotors, mit dem Steuerschaltkreis, insbesondere elektrisch, verbunden ist. Der Energiespeicher weist ein von dem Pumpengehäuse lösbares Energiespeichergehäuse auf, innerhalb dessen die wenigstens eine elektrische Energiespeicherzelle angeordnet ist.

Das Steuerungssystem weist eine erste Schnittstelle auf, die an dem Pumpengehäuse angeordnet ist. Der Energiespeicher weist eine zweite Schnittstelle auf, die an dem Energiespeichergehäuse angeordnet ist. Die erste Schnittstelle und die zweite Schnittstelle sind kompatibel zueinander ausgebildet, so dass das Energiespeichergehäuse über die erste Schnittstelle und die zweite Schnittstelle mechanisch und elektrisch mit dem Pumpengehäuse verbindbar ist. Im Betrieb des Steuerungssystems ist das Energiespeichergehäuse über die erste und die zweite Schnittstelle mechanisch und elektrisch mit dem Pumpengehäuse verbunden.

Die Verbindung des Pumpengehäuses mit dem Energiespeichergehäuse ist insbesondere als Rastverbindung und/oder Steckverbindung und/oder Klemmverbindung ausgestaltet.

Die elektrische Verbindung des Energiespeichers beziehungsweise des Energiespeichergehäuses mit dem Pumpengehäuse beziehungsweise mit dem Pumpenmotor kann beispielsweise über einen oder mehrere elektrische Steckkontakte, insbesondere so genannte Tulpenkontakte oder Schwertkontakte, erfolgen. Beispielsweise können an der ersten Schnittstelle und der zweiten Schnittstelle entsprechende jeweils zueinander kompatible Stecker oder Buchsen beziehungsweise Aufnahmen oder dergleichen vorgesehen sein, um die elektrische Verbindung des Energiespeichers mit dem Pumpengehäuse, insbesondere des Steuerschaltkreises mit dem Pumpenmotor, zu erzielen.

Insbesondere ist die Pumpe dazu eingerichtet, die Flüssigkeit wahlweise von dem Zuflussanschluss zu dem Abflussanschluss zu pumpen oder die Flüssigkeit nicht zu pumpen. Wird die Flüssigkeit von dem Zuflussanschluss zu dem Abflussanschluss gepumpt, so erzeugt die Pumpe also einen Flüssigkeitsstrom von dem Zuflussanschluss zu dem Abflussanschluss. Wird die Flüssigkeit nicht gepumpt, so ist der Flüssigkeitsstrom insbesondere unterbrochen oder abgesperrt.

Das Aktivieren des Pumpenmotors abhängig von dem Steuerbefehl entspricht insbesondere einem Ansteuern des Pumpenmotors zum Erzeugen des Flüssigkeitsstroms beziehungsweise zum Pumpen der Flüssigkeit von dem Zuflussanschluss zu dem Abflussanschluss. Das Deaktivieren des Pumpenmotors abhängig von dem Steuerbefehl entspricht insbesondere einem Ansteuern des Pumpenmotors zum Unterbrechen oder Absperren des Flüssigkeitsstroms.

Gemäß zumindest einer Ausführungsform enthält der elektrische Energiespeicher ine Kommunikationsvorrichtung, die zur drahtlosen Kommunikation mit dem externen Rechensystem eingerichtet ist. Der elektrische Energiespeicher enthält den Steuerschaltkreis, der dazu eingerichtet ist, den Steuerbefehl über die Kommunikationsvorrichtung zu erhalten.

Insbesondere ist der Steuerschaltkreis in solchen Ausführungsformen ausschließlich als Teil des Energiespeichers ausgestaltet und beispielsweise vollständig innerhalb des Energiespeichergehäuses angeordnet. Die Pumpe kann dann beispielsweise im Wesentlichen mechanische Komponenten und den Pumpenmotor beinhalten, während die Steuerung vollständig von dem Energiespeicher übernommen wird. Beispielsweise kann die Pumpe neben dem Pumpenmotor und elektrischen Verbindungen zu dem Energiespeicher ausschließlich mechanische Komponenten enthalten.

Gemäß zumindest einer Ausführungsform ist der Steuerschaltkreis außerhalb des Energiespeichergehäuses angeordnet, beispielsweise innerhalb des Pumpengehäuses.

Der Steuerschaltkreis kann beispielsweise einen Mikrokontroller und/oder steuerbare und/oder programmierbare Platine und/oder eine Speichereinheit, insbesondere eine speicherprogrammierbare Komponente enthalten.

Die Speichereinheit kann beispielsweise ein Bewässerungsprogramm speichern, beispielsweise in Form von Befehlen, die von dem Steuerschaltkreis ausgeführt werden können. Bei Ausführung der Befehle durch den Steuerschaltkreis veranlassen die Befehle den Steuerschaltkreis, den Steuerbefehl zu erzeugen, um den Pumpenmotor entsprechend anzusteuern.

Gemäß zumindest einer Ausführungsform weist der Energiespeicher die Kommunikationsvorrichtung auf, die zur drahtlosen Kommunikation mit einem externen Rechensystem eingerichtet ist und der Steuerschaltkreis ist dazu eingerichtet, den Steuerbefehl über die Kommunikationsvorrichtung zu erhalten.

Die Kommunikationsvorrichtung oder eine weitere Kommunikationsvorrichtung des Energiespeichers kann beispielsweise mit dem Steuerschaltkreis kommunizieren, insbesondere, wenn dieser außerhalb des Energiespeichergehäuses angeordnet ist beziehungsweise nicht Teil des Energiespeichers ist, sodass der Steuerschaltkreis den Steuerbefehl erhalten kann.

Gemäß zumindest einer Ausführungsform weist das Steuerungssystem die Kommunikationsvorrichtung auf, die zur drahtlosen Kommunikation mit einem externen Rechensystem eingerichtet ist und der Steuerschaltkreis ist dazu eingerichtet, den Steuerbefehl über die Kommunikationsvorrichtung zu erhalten.

Das Steuerungssystem ist zur Verwendung mit oder in einer Bewässerungsanlage ausgestaltet. Die Bewässerungsanlage kann neben dem Steuerungssystem eine oder mehrere Leitungen, beispielsweise Rohrleitungen oder Schlauchleitungen, die mit dem Zuflussanschluss zur Zuführung von Flüssigkeit in das Steuerungssystem beziehungsweise mit dem Abflussanschluss zum Ableiten von Flüssigkeit aus dem Steuerungssystem verbunden sein können. Auf der Seite des Abflussanschlusses kann die Bewässerungsanlage beispielsweise eine Vorrichtung zur Wasserausbringung auf einer zu bewässernden Fläche aufweisen. Beispielsweise kann die Bewässerungsanlage eine Wasserverteilungsvorrichtung, wie etwa einen Sprinkler, einen Tropfschlauch und so weiter, zur Wasserausbringung enthalten. Außerdem kann die Bewässerungsanlage auch ein Schlauchverteilersystem aufweisen, das mit dem Abflussanschluss des Steuerungssystems verbunden werden kann, um zwei oder mehr Schlauchleitungen anzuschließen.

Der Zuflussanschluss und der Abflussanschluss können also entsprechend als Anschlüsse zur mechanischen Verbindung eines Wasserschlauchs oder einer sonstigen Wasserleitung ausgestaltet sein.

Hier und im Folgenden werden die Begriffe "Flüssigkeit" und "Wasser" im Wesentlichen austauschbar verwendet. Das Steuerungssystem ist in jedem Fall zur Steuerung eines Wasserstroms als Flüssigkeitsstrom ausgelegt. Prinzipiell können jedoch gegebenenfalls auch andere Flüssigkeiten Teil des Flüssigkeitsstroms sein.

Wie beschrieben kann der Pumpenmotor je nach Ansteuerung durch den Steuerschaltkreis den Flüssigkeitsstrom erzeugen sowie den Flüssigkeitsstrom unterbrechen oder absperren. Der Steuerschaltkreis kann den Pumpenmotor ansteuern, um diesen zu aktivieren oder zu deaktivieren.

Bei der wenigstens einen Energiespeicherzelle kann es sich insbesondere um wenigstens eine Akkumulatorzelle, beispielsweise Lithium-Ionen-Akkumulatorzelle, handeln. Sind mehrere elektrische Energiespeicherzellen vorhanden, so können diese untereinander in Reihe und/oder parallel geschalten sein.

Insbesondere kann der Energiespeicher als Akkupack, insbesondere als wechselbarer oder austauschbarer Akkupack, ausgestaltet sein. In diesem Fall verfügt der Energiespeicher über lösbare elektrische Kontakte, die beispielsweise durch Steckverbindungen oder Klemmverbindungen ausgestaltet sind und die wenigstens eine Energiespeicherzelle mit dem Steuerschaltkreis verbinden. Insbesondere kann der Energiespeicher als so genanntes Systemakkupack ausgebildet sein, das im Rahmen der bestimmungsgemäßen Verwendung von dem Steuerungssystem beziehungsweise der Bewässerungsanlage entfernt und zur elektrischen Energieversorgung eines sonstigen elektrischen Geräts, etwa eines elektrischen Gartengeräts, eines Elektrowerkzeugs oder eines elektrischen Haushaltsgeräts, mit diesem verbunden werden kann.

Das externe Rechensystem beinhaltet insbesondere eine oder mehrere externe Recheneinheiten, die räumlich getrennt von dem Steuerungssystem sowie der Bewässerungsanlage angeordnet und funktional von diesen unabhängig sind. Unter einer Recheneinheit kann insbesondere ein Datenverarbeitungsgerät verstanden werden, die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, durchzuführen. Das externe Rechensystem kann beispielsweise ein Servercomputersystem oder eine so genannte Computercloud beinhalten und/oder mobiles elektronisches Endgerät, wie beispielsweise ein Mobiltelefon, Smartphone, Notebook, Computer und so weiter.

Das externe Rechensystem, insbesondere das mobile elektronische Endgerät, kann dabei unter anderem als Benutzerschnittstelle dienen oder eine Benutzerschnittstelle beinhalten, insbesondere eine Benutzereingabeschnittstelle. Die Benutzerschnittstelle kann eine oder mehrere Hardware-Komponenten und/oder eine oder mehrere Software-Komponenten, beispielsweise in Form von Computerprogrammen oder Applikationen für mobile elektronische Geräte beinhalten.

Die drahtlose Kommunikation der Kommunikationsvorrichtung des Steuerungssystems mit dem externen Rechensystem kann beispielsweise gemäß einem GSM-Standard, einem auf dem GSM-Standard basierenden Standard, Edge, UMTS, HSDPA, LTE oder einem sonstigen Mobilfunkstandard realisiert sein. Die Kommunikation kann auch beispielsweise basierend auf LTE-M, LTE-CAT-M1 oder einem sonstigen Standard erfolgen. Die Kommunikation kann auch gemäß einem Schmalband-Internet-der-Dinge-Standard, NB-IOT (englisch: "narrow band internet of things"), oder einem anders ausgestalteten Niedrigenergieweitverkehrnetzwerk, LPWAN (englisch: "low power wide area network"), erfolgen.

Über die drahtlose Kommunikation und die entsprechende Ansteuerung des Pumpenmotors abhängig von dem Steuerbefehl kann das Steuerungssystem und damit die Bewässerungsanlage also ortsungebunden beeinflusst werden. Auf diese Weise wird es ermöglicht, beispielsweise zentral über die Cloud und/oder über das mobile elektronische Endgerät Tagesprogramme, Wochenprogramme und so weiter für das Erzeugen beziehungsweise Unterbrechen oder Absperren des Flüssigkeitsstroms und damit zur automatischen Bewässerung vorzugeben, zu aktivieren, zu deaktivieren oder zu verändern, ohne dass der Benutzer vor Ort zugegen sein muss und direkten physischen Zugang zu dem Steuerungssystem haben muss. Dabei kann je nach Vorgabe eines entsprechenden Programms das Erzeugen beziehungsweise Unterbrechen oder Absperren des Flüssigkeitsstroms insbesondere auch mehrfach täglich erfolgen. Insbesondere können prinzipiell beliebig viele Vorgänge täglich auf diese Weise gesteuert werden.

Ein weiterer Vorteil ist, dass auf diese Weise auch komplexe Bewässerungsmodelle oder Wettermodelle hinterlegt werden können, anhand derer die Steuerung des Pumpenmotors erfolgen kann. Durch die Steuerung über die externe Kommunikation wird die verfügbare Rechenleistung oder der verfügbare Speicherplatz nicht durch die Ausgestaltung des Steuerungssystems selbst begrenzt.

Ein weiterer Vorteil, der insbesondere durch die Integration der Kommunikationsvorrichtung und des Steuerschaltkreises zusammen mit der wenigstens einen Energiespeicherzelle in dem elektrischen Energiespeicher resultiert, ist, dass die sonstigen Komponenten des Steuerungssystems nicht über komplexe elektronische Schaltkreise oder sonstige Steuerungselektronik verfügen müssen. Die gesamte Steuerungsfunktionalität des Steuerungssystems kann also in den Energiespeicher integriert werden. Die so in dem Energiespeicher in Form des Steuerschaltkreises und der Kommunikationsverbindung realisierte Funktionalität beziehungsweise die dazu vorgesehenen Komponenten können dann mit Vorteil auch in anderen Elektrogeräten genutzt werden, wenn der Energiespeicher für das Steuerungssystem für die Bewässerungsanlage zeitweise nicht benötigt wird.

Das Pumpengehäuse und das Energiespeichergehäuse sind dabei voneinander verschieden. Darüber hinaus sind insbesondere auch der Steuerschaltkreis und die Kommunikationsvorrichtung innerhalb des Energiespeichergehäuses oder an dem Energiespeichergehäuse angeordnet. Der Zuflussanschluss und der Abflussanschluss sind insbesondere an oder in dem Pumpengehäuse vorgesehen und beinhalten insbesondere jeweils eine Öffnung in dem Pumpengehäuse zum Einlass beziehungsweise Auslass von Wasser.

Im Betrieb des Steuerungssystems ist das Energiespeichergehäuse insbesondere mechanisch an dem Pumpengehäuse befestigt und der Steuerschaltkreis ist über die Verbindung des Energiespeichergehäuses mit dem Pumpengehäuse elektrisch mit dem Pumpenmotor verbunden. Das Energiespeichergehäuse ist dabei lösbar, insbesondere zerstörungsfrei lösbar, mit dem Pumpengehäuse verbunden, beispielsweise über eine Rastverbindung und/oder oder eine Steckverbindung. Insbesondere kann die mechanische Verbindung des Pumpengehäuses mit dem Energiespeichergehäuse als formschlüssige Verbindung und/oder kraftschlüssige Verbindung verbunden sein, ohne dass eine stoffschlüssige Verbindung vorliegt. Mit anderen Worten kann die mechanische Verbindung des Energiespeichergehäuses mit dem Pumpengehäuse gelöst werden, ohne eine stoffschlüssige Verbindung zu lösen. Mit anderen Worten ist der Energiespeicher als Wechselakkupack, insbesondere Systemakkupack ausgestaltet.

Zur elektrischen und mechanischen Verbindung kann das Steuerungssystem entsprechende Schnittstellen an dem Pumpengehäuse und dem Energiespeicher aufweisen.

Der Energiespeicher ist in verschiedenen Ausführungsformen Teil eines Wechselakkusystems und kann beispielsweise wahlweise mit der Pumpe oder mit einem Bewässerungscomputer oder dergleichen verbunden werden. Der Energiespeicher kann beispielsweise erkennen, mit welcher Komponente er gerade gekoppelt ist und die Bewässerung gegebenenfalls entsprechend anpassen.

Gemäß einem weiteren Aspekt der Erfindung wird eine Bewässerungsanlage zur automatischen Bewässerung einer Fläche angegeben. Die Bewässerungsanlage weist ein erfindungsgemäßes Steuerungssystem für eine Bewässerungsanlage auf.

Gemäß zumindest einer Ausführungsform der Bewässerungsanlage enthält die Bewässerungsanlage das externe Rechensystem und das externe Rechensystem ist dazu eingerichtet, zur Übertragung des Steuerbefehls an den Steuerschaltkreis ein Steuersignal drahtlos an die Kommunikationsvorrichtung zu senden.

Das Steuersignal ist dabei ein elektromagnetisches Signal, welches den Steuerbefehl enthält oder codiert oder dem Steuerbefehl entspricht.

Gemäß zumindest einer Ausführungsform der Bewässerungsanlage weist die Bewässerungsanlage eine Wasserverteilungsvorrichtung auf, die mit dem Abflussanschluss des Steuerungssystems gekoppelt, insbesondere direkt oder indirekt verbunden ist, um bei aktiviertem Pumpenmotor Wasser auf die Fläche auszubringen.

Die Wasserverteilungsvorrichtung kann dabei ein Schlauchsystem, einen Bewässerungsschlauch, einen Tropfschlauch, eine Sprengeranlage, eine Sprinkleranlage und/oder ein Schlauchverteilungssystem und so weiter beinhalten. Mittels eines Schlauchverteilungssystems können mehrere Geräte angeschlossen werden, sodass insbesondere ein mehrfaches Ein- und Ausschalten zur Wasserversorgung der verschiedenen Geräte ermöglicht wird.

Optional kann die Bewässerungsanlage auch eine Pumpe, insbesondere eine automatisch betreibbare oder ansteuerbare Pumpe, aufweisen, die zwischen einer Wasserquelle und dem Zuflussanschluss angeordnet werden kann und mit dem Zuflussanschluss verbunden werden kann. Alternativ kann der Zuflussanschluss des Steuerungssystems direkt an die Wasserquelle, beispielsweise eine Hauswasserleitung oder dergleichen, angeschlossen werden.

Gemäß zumindest einer Ausführungsform wird ein Standort der zu bewässernden Fläche bestimmt und für den Standort werden automatisch Wetterdaten erfasst. Unter Verwendung eines vorgegebenen Modells zur Bestimmung einer auszubringenden Wassermenge wird, insbesondere mittels des externen Rechensystems, ein Wasserbedarf für die Fläche bestimmt. Das Steuersignal wird abhängig von dem bestimmten Wasserbedarf erzeugt.

In dieser Weise kann also das ausgebrachte Wasser durch das gesteuerte Erzeugen des Flüssigkeitsstroms beziehungsweise durch Unterbrechen oder Absperren des Flüssigkeitsstroms wetterabhängig und automatisch gesteuert werden.

Die Wetterdaten werden insbesondere über einen vorgegebenen Zeitraum, der auch ein gleitender Zeitraum sein kann, automatisch erfasst und insbesondere gespeichert, beispielsweise auf einer Speichereinheit des externen Rechensystems. Bei den Wetterdaten handelt es sich dabei insbesondere nicht um prognostizierte Wetterdaten für einen zukünftigen Zeitraum, sondern um Wetterdaten betreffend den jeweils aktuellen Zeitpunkt beziehungsweise den Zeitraum, über den hinweg die Wetterdaten erfasst werden. Die Wetterdaten kann das externe Rechensystem dabei beispielsweise von einem Servercomputer oder einer sonstigen Datenbank, beispielsweise über eine Internetverbindung, von Wetterstationen, Privatpersonen oder kommerziellen Anbietern erhalten.

Alternativ oder zusätzlich können die Wetterdaten oder Teile davon auch von vor Ort angeordneten Sensoren, insbesondere Feuchtigkeitssensoren, Regensensoren, Temperatursensoren und so weiter, erhalten werden, die an oder in der Nähe der zu bewässernden Fläche vorgesehen sein können.

Die Wetterdaten werden dann von dem externen Rechensystem als Eingabe für das Modell zur Bestimmung einer auszubringenden Wassermenge verwendet, also mit andren Worten als Eingabe in das Modell zur Bestimmung einer auszubringenden Wassermenge eingespeist. Eine Ausgabe des Modells zur Bestimmung einer auszubringenden Wassermenge entspricht dann dem Wasserbedarf für die Fläche oder eine Größe, aus welcher der Wasserbedarf für die Fläche direkt ermittelt werden kann. Das Modell zur Bestimmung einer auszubringenden Wassermenge kann beispielsweise ein empirisches Modell sein, das abhängig von den Wetterdaten abschätzen kann, welche Wassermenge über welchen Zeitraum pro Flächeneinheit verdunstet und daher über die Bewässerung der entsprechenden nachgeliefert werden sollte.

Die Wetterdaten können beispielsweise Informationen betreffend eine Regen- oder Niederschlagsmenge, eine Windgeschwindigkeit, eine Windrichtung, eine Lufttemperatur und/oder gegebenenfalls weitere wetterbezogene Parameter für den Standort beinhalten. Die Wetterdaten gelten dabei insbesondere für einen geografischen Bereich, wobei der Standort innerhalb dieses Bereichs liegt, sodass sie in diesem Sinne als Wetterdaten für den Standort aufgefasst werden können. Die Wetterdaten können auch Bildinformationen und/oder Radarinformationen betreffend die zu bewässernde Fläche beinhalten. Dadurch kann die eingetragene Wassermenge großräum ig abgeschätzt werden.

Das Bewässern erfolgt dabei insbesondere hinsichtlich einer Menge des auszubringenden Wassers und einem Zeitpunkt oder Zeitraum, zu dem das Wasser ausgebracht wird, entsprechend dem ermittelten Wasserbedarf. Der ermittelte Wasserbedarf kann also insbesondere Informationen betreffend die erforderliche Wassermenge beinhalten und kann auch Informationen betreffend den entsprechenden Zeitpunkt oder Zeitraum, zu dem die Wassermenge ausgebracht werden soll, beinhalten.

Der Einsatz des Modells zur Bestimmung einer auszubringenden Wassermenge ermöglicht es, das Wasser in einer für die entsprechenden Pflanzen Menge beziehungsweise zur optimalen Zeit auszubringen, sodass insbesondere eine Überversorgung und eine Unterversorgung mit Wasser vermieden werden. Durch die Berücksichtigung der Wetterdaten mittels des Modells zur Bestimmung einer auszubringenden Wassermenge wird ein wesentlicher Einflussfaktor auf die Verdunstung beziehungsweise den Wasserbedarf berücksichtigt. Das Modell zur Bestimmung einer auszubringenden Wassermenge kann jedoch auch weitere Eingangsgrößen berücksichtigen, um die Vorhersage für den Wasserbedarf genauer und zuverlässiger zu machen.

Aus den Wetterdaten kann insbesondere eine Information zur eingetragenen Wassermenge oder zur voraussichtlich eingetragenen Wassermenge erhalten werden. Auch eine Speicherfähigkeit des Bodens kann berücksichtigt werden. Ebenso können optional Daten von vor Ort positionierten Sensoren, insbesondere Feuchtigkeitssensoren, Regensensoren, Temperatursensoren und so weiter, berücksichtigt werden. Wird in dieser Weise festgestellt, dass voraussichtlich mehr Wasser verdunstet als auf natürliche Weise zugeführt wird, kann die künstliche Bewässerung entsprechend geplant werden.

Das Modell zur Bestimmung einer auszubringenden Wassermenge kann insbesondere als ein Verdunstungsmodell ausgestaltet sein oder ein Verdunstungsmodell beinhalten.

Ein weiterer Vorteil ist, dass es nicht erforderlich ist, mittels Sensoren standortabhängige Parameter zu messen, wie beispielsweise eine Feuchtigkeit im Erdboden, eine Temperatur an dem Standort und so weiter. Dadurch wird die Komplexität des eingesetzten Bewässerungssystems reduziert, es werden Kosten eingespart und es wird ein Wartungsaufwand für das Bewässerungssystem reduziert.

Gemäß zumindest einer Ausführungsform erfolgen die automatische Erfassung der Wetterdaten, die Bestimmung des Wasserbedarfs und die Erzeugung des Steuersignals während einer automatischen Bewässerungsphase.

Gemäß zumindest einer Ausführungsform ist der automatischen Bewässerungsphase eine manuelle Bewässerungsphase vorgelagert. Während der manuellen Bewässerungsphase wird mittels des externen Rechensystems automatisch ein theoretischer Wasserbedarf für die Fläche bestimmt, eine manuell auf die Fläche ausgebrachte Wassermenge bestimmt und das Modell zur Bestimmung einer auszubringenden Wassermenge basierend auf dem theoretischen Wasserbedarf und der manuell ausgebrachten Wassermenge mittels des externen Rechensystems erzeugt oder angepasst.

Durch Berücksichtigung der manuell auf die Fläche ausgebrachten Wassermenge zum Erzeugen beziehungsweise Anpassen des Modells zur Bestimmung einer auszubringenden Wassermenge können systembedingte Ungenauigkeiten kompensiert werden, sodass der ermittelte Wasserbedarf mit höherer Genauigkeit ermittelt werden kann und die Bewässerung dadurch noch genauer und zielgerichteter erfolgen kann.

Zum einen kann die Wasserverdunstung, die mittels des Modells zur Bestimmung einer auszubringenden Wassermenge beziehungsweise des initialen Modells zur Bestimmung einer auszubringenden Wassermenge abhängig von den Wetterdaten bestimmt wird, auch von weiteren Bedingungen, nämlich beispielsweise der Bodenbeschaffenheit der Fläche, dem Bewuchs der Fläche oder der Art der auf der Fläche vorhandenen Pflanzen abhängen. Die Verdunstung kann auch von einer Beschattung der Fläche durch Objekte wie beispielsweise Häuser oder dergleichen abhängen.

Zudem können die Wetterdaten nur mit einer endlichen Genauigkeit beziehungsweise einer endlichen Ortsauflösung erfasst werden, sodass örtlich sehr lokal ausgeprägte Wetterphänomene oder Wetterbedingungen gegebenenfalls nicht oder nicht vollständig berücksichtigt werden können. Durch den Abgleich des theoretischen Wasserbedarfs mit der manuell ausgebrachten Wassermenge können diese Ungenauigkeiten teilweise oder vollständig kompensiert werden.

Zudem ist der tatsächliche Wasserbedarf gegebenenfalls auch abhängig von dem anfänglichen Feuchtigkeitsgehalt im Erdreich der Fläche, der durch die Wetterdaten nicht oder nur bedingt angegeben werden kann. Auch diese Unsicherheit kann durch den Abgleich mit der manuell ausgebrachten Wassermenge kompensiert werden.

Andererseits kann durch den Abgleich mit der manuell ausgebrachten Wassermenge auch dann, wenn nur eine eingeschränkte Menge an Wetterdaten für den Standort zur Verfügung steht, eine hinreichend genaue Vorhersage des Wasserbedarfs erreicht werden.

Die manuelle Bewässerungsphase kann also als Anlernphase oder Kalibrierungsphase für die nachfolgende automatische Bewässerungsphase angesehen werden. Auch kann die beschriebene Kalibrierung anhand des Abgleichs der manuell ausgebrachten Wassermenge mit dem theoretischen Wasserbedarf während späterer Kalibrierungszeiträumen wiederholt werden, um sich über die Zeit verändernden Parametern, wie beispielsweise dem Bewuchs, der Grundfeuchtigkeit im Erdreich oder auch dem zu bewässernden Flächeninhalt, Rechnung zu tragen.

Während der manuellen Bewässerungsphase kann der Benutzer beispielsweise auf Erfahrungswerte oder Datenbanken oder die konkrete Situation beziehungsweise den konkreten Zustand der Pflanzen auf der Fläche zurückgreifen, um die manuell ausgebrachte Wassermenge derart zu steuern, dass diese einer möglichst idealen Bewässerung für die Fläche entspricht.

Gemäß zumindest einer Ausführungsform werden während der manuellen Bewässerungsphase weitere Wetterdaten für den Standort erfasst. Der theoretische Wasserbedarf wird mittels des externen Rechensystems unter Verwendung eines vorgegebenen initialen Modells zur Bestimmung einer auszubringenden Wassermenge abhängig von den weiteren Wetterdaten bestimmt und das initiale Modell zur Bestimmung einer auszubringenden Wassermenge wird abhängig von einer Abweichung des theoretischen Wasserbedarfs von der manuell ausgebrachten Wassermenge angepasst, um das Modell zur Bestimmung einer auszubringenden Wassermenge zu erhalten.

Gemäß zumindest einer Ausführungsform wird die manuell ausgebrauchte Wassermenge basierend auf einer entsprechenden Benutzereingabe durch das externe Rechensystem, beispielsweise über die Benutzerschnittstelle, bestimmt. In anderen Ausführungsformen oder zusätzlich kann die manuell ausgebrauchte Wassermenge automatisch mittels des erfindungsgemäßen Steuerungssystems, insbesondere mittels eines Durchflussmengensensors des Steuerungssystems, oder mittels eines Durchflussmengensensors der erfindungsgemäßen Bewässerungsanlage erfasst werden und, beispielsweise drahtlos, an das externe Rechensystem übermittelt werden.

Durch den Durchflussmengensensor kann das System beispielsweise auch kalibriert werden. Dabei können beispielsweise die Größe und/oder Beschaffenheit der zu bewässernden Fläche, manuelles Gießen und so weiter berücksichtigt werden.

Gemäß zumindest einer Ausführungsform werden während der manuellen Bewässerungsphase weitere Wetterdaten für den Standort erfasst und gespeichert. Der theoretische Wasserbedarf wird mittels des externen Rechensystems unter Verwendung eines vorgegebenen initialen Modells zur Bestimmung einer auszubringenden Wassermenge abhängig von den weiteren Wetterdaten, insbesondere als Eingabe, bestimmt. Das initiale Modell zur Bestimmung einer auszubringenden Wassermenge wird abhängig von einer Abweichung des theoretischen Wasserbedarfs von der manuell ausgebrachten Wassermenge automatisch angepasst, insbesondere mittels des externen Rechensystems, um das Modell zur Bestimmung einer auszubringenden Wassermenge zu erzeugen.

Bezüglich der Bestimmung des theoretischen Wasserbedarfs anhand des vorgegebenen initialen Modells zur Bestimmung einer auszubringenden Wassermenge und bezüglich der Erfassung der weiteren Wetterdaten wird auf die obigen Ausführungen zum Bestimmen des Wasserbedarfs basierend auf dem Modell zur Bestimmung einer auszubringenden Wassermenge und zum Erfassen der Wetterdaten verwiesen.

Insbesondere können die weiteren Wetterdaten statistisch vorverarbeitet oder ausgewertet werden und der theoretische Wasserbedarf kann basierend auf den statistisch vorverarbeiteten oder ausgewerteten weiteren Wetterdaten bestimmt werden. Beispielsweise kann eine mittlere Verdunstungsrate basierend auf den weiteren Wetterdaten bestimmt werden und der theoretische Wasserbedarf kann basierend auf der mittleren Verdunstungsrate bestimmt werden. Dadurch der theoretische Wasserbedarf robuster bestimmt werden und die Bewässerung kann weiter optimiert werden.

Zum Anpassen des initialen Modells zur Bestimmung einer auszubringenden Wassermenge können beispielsweise Parameter des initialen Modells zur Bestimmung einer auszubringenden Wassermenge verändert werden. Alternativ oder zusätzlich können dem initialen Modell zur Bestimmung einer auszubringenden Wassermenge auch einer oder mehrere Rechenschritte vor- oder nachgeschaltet werden, um das Modell zur Bestimmung einer auszubringenden Wassermenge zu erhalten. In einem einfachen Fall kann beispielsweise die Ausgabe des initialen Modells zur Bestimmung einer auszubringenden Wassermenge mit einem Faktor multipliziert werden, der von der Abweichung des theoretischen Wasserbedarfs von der manuell ausgebrachten Wassermenge abhängt, um eine entsprechend korrigierte Ausgabe des Modells zur Bestimmung einer auszubringenden Wassermenge zu erhalten.

Solche Ausführungsformen erlauben eine flexible und dynamische Anpassung des aktuellen Modells zur Bestimmung einer auszubringenden Wassermenge je nach Veränderung der äußeren Bedingungen oder auch des Nutzerverhaltens.

Gemäß zumindest einer Ausführungsform werden automatisch Wettervorhersagedaten für den Standort erfasst und das Steuersignal wird abhängig von den Wettervorhersagedaten erzeugt.

Die Wettervorhersagedaten können dabei Informationen enthalten, wie diese auch in den Wetterdaten enthalten sind. Die Wettervorhersagedaten betreffen dabei einen vordefinierten zukünftigen Zeitraum. Durch die Berücksichtigung der Wettervorhersagedaten kann beispielsweise eine automatische Ausbringung von Wasser vermieden oder reduziert werden, wenn innerhalb des vordefinierten zukünftigen Zeitraums Niederschlag in einer entsprechenden Menge zu erwarten ist. Dadurch können Energie und Wasser eingespart sowie eine Überversorgung mit Wasser verhindert werden.

Gemäß zumindest einer Ausführungsform wird mittels der Benutzerschnittstelle eine Benutzereingabe betreffend den Standort der Fläche und/oder einen Standort der Bewässerungsanlage, insbesondere des Steuerungssystems, erfasst, um den Standort der Fläche zu bestimmen.

Wenn die Benutzerschnittstelle als Teil eines mobilen elektronischen Endgeräts, beispielsweise eines Smartphones, ausgestaltet ist, so kann sich der Benutzer beispielsweise zu dem Standort der Fläche begeben und durch eine automatische oder manuelle Positionsbestimmung Koordinaten des Standorts der Fläche erfassen.

Gemäß zumindest einer Ausführungsform werden mittels einer Empfängereinheit für ein globales Navigationssatellitensystem, GNSS, Standortdaten betreffend den Standort der Bewässerungsanlage, insbesondere des Steuerungssystems, erfasst, um den Standort der Fläche zu bestimmen.

Die Benutzerschnittstelle beziehungsweise die Empfängereinheit für das GNSS kann dabei insbesondere mit dem externen Rechensystem zur Übertragung der Standortdaten beziehungsweise der Benutzereingabe gekoppelt sein.

Durch die Erfassung der Standortdaten mittels der Empfängereinheit kann die Bewässerung weiter automatisiert werden, sodass ein Komfortgrad für den Benutzer erhöht wird.

Gemäß zumindest einer Ausführungsform werden mittels eines Funkempfängers, beispielsweise des externen Rechensystems, der Benutzerschnittstelle, des mobilen elektronischen Endgeräts oder der Bewässerungsanlage, Zellstandortdaten einer Funknetzzelle eines Funknetzes erfasst, um den Standort der Fläche zu bestimmen.

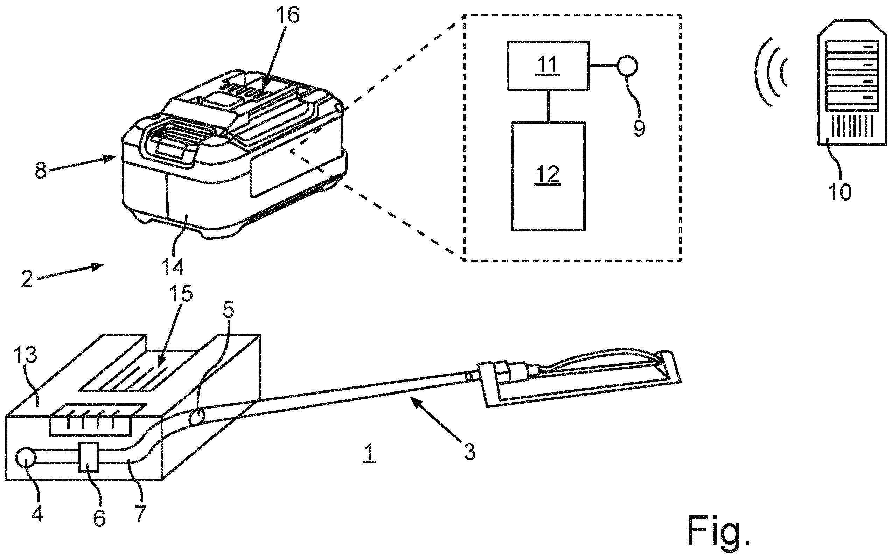

Im Folgenden werden Ausführungsbeispiele der Erfindung anhand der Zeichnungen beschrieben. In der einzigen Figur Fig. ist dazu schematisch eine beispielhafte Ausführungsform einer Bewässerungsanlage mit einem erfindungsgemäßen Steuerungssystem dargestellt.

Die in der Fig. dargestellte Bewässerungsanlage 1, insbesondere das Steuerungssystem 2, weist ein Pumpengehäuse 13 auf, innerhalb dessen ein elektrisch steuerbarer Pumpenmotor 6, insbesondere ein Elektromotor, angeordnet ist. Auf einer Seite des Pumpenmotors 6 ist an dem Pumpengehäuse 13 ein Zuflussanschluss 4 angeordnet, mit dem das Pumpengehäuse 13 an eine Wasserquelle, beispielsweise eine Hauswasserleitung oder ein Wasserreservoir, angeschlossen werden kann. Auf einer dem Zuflussanschluss 4 abgewandten Seite des Pumpenmotors 6 ist ein Abflussanschluss 5 in dem Pumpengehäuse 13 vorgesehen, um eine Wasserverteilungsvorrichtung 3 der Bewässerungsanlage 1 mit dem Steuerungssystem 2, insbesondere dem Pumpengehäuse 13, zu koppeln. Die Wasserverteilungsvorrichtung 3 kann dabei einen oder mehrere Schläuche, ein Schlauchverteilungssystem, ein Sprinklergerät und so weiter aufweisen, um Wasser, das an dem Zuflussanschluss 4 bereitgestellt wird und bei entsprechender Ansteuerung des Pumpenmotors 6 von diesem zu dem Abflussanschluss 5 und somit zu der Wasserverteilungsvorrichtung 3 gepumpt wird, auf einer zu bewässernden Fläche auszubringen.

Des Weiteren weist das Steuerungssystem 2 einen elektrischen Energiespeicher 8 auf, insbesondere ein Akkupack, das zur elektrischen Energieversorgung und zur Steuerung des Pumpenmotors6 mit dem Pumpengehäuse 13 verbunden werden kann. Dazu ist an dem Pumpengehäuse 13 eine erste Schnittstelle 15 zur mechanischen und elektrischen Kopplung des Energiespeichers 8 vorgesehen. Der Energiespeicher 8 weist ein Energiespeichergehäuse 14 auf, das wiederum eine zweite Schnittstelle 16 aufweist, welche mit der zweiten Schnittstelle 15 des Pumpengehäuses 13 kompatibel ist. Insbesondere kann das Energiespeichergehäuse 14 beispielsweise in eine entsprechende Aufnahme des Pumpengehäuses 13 eingeschoben werden und rastet dann bei ordnungsgemäßer Anbringung ein, so dass eine mechanische Kopplung und eine elektrische Kopplung des Energiespeichergehäuses 14 mit dem Pumpengehäuse 13 erfolgt. Wird das Steuerungssystem 2 nicht verwendet, so kann durch Lösen einer Rastverbindung oder dergleichen das Energiespeichergehäuse 14 zerstörungsfrei von dem Pumpengehäuse 13 entfernt werden und der Energiespeicher 8 beispielsweise zur Energieversorgung sonstiger Elektrogeräte oder Elektrowerkzeuge verwendet werden. Es handelt sich bei dem Energiespeicher 8 also insbesondere um ein Wechselakkupack oder Systemakkupack, das kompatibel zu mehreren Elektrogeräten ist und wahlweise mit diesen eingesetzt werden kann.

Der Energiespeicher 8 enthält einen Steuerschaltkreis 11 und eine Kommunikationsvorrichtung 9 sowie wenigstens eine elektrische Energiespeicherzelle 12, beispielsweise eine oder mehrere Lithium-Akkumulatorzellen, die zur Energieversorgung des Steuerschaltkreises 11 mit diesem verbunden sind.

Der Steuerschaltkreis 11 kann über die Kommunikationsvorrichtung 9 einen Steuerbefehl erhalten und abhängig von dem Steuerbefehl den Pumpenmotor 6 über die mittels der Schnittstellen 15, 16 hergestellte elektrische Verbindung ansteuern, um Flüssigkeit durch Aktivieren des Pumpenmotors 6 von dem Zuflussanschluss 4 zu dem Abflussanschluss 5 zu pumpen beziehungsweise den Flüssigkeitsstrom durch Deaktivieren des Pumpenmotors 6 zu unterbrechen oder abzusperren. Zum Erhalten des Steuerbefehls kann die Kommunikationsvorrichtung 9 beispielsweise mit einem externen Rechensystem 10, etwa einem Cloudserver, kommunizieren und von diesem ein Steuersignal erhalten, welches den Steuerbefehl codiert.

Auch der Pumpenmotor 6 wird über die wenigstens eine Energiespeicherzelle 12 mit elektrischer Energie versorgt, wenn der Energiespeicher 8 ordnungsgemäß mit dem Pumpengehäuse 13 verbunden ist.

Wie vorstehend beschrieben wurde, insbesondere anhand der Figur, wird es durch die Erfindung ermöglicht, eine einfache oder komplexe Fernsteuerung einer Bewässerungsanlage zu realisieren. Hierzu wird die relevante Steuerungsfunktionalität zum Unterbrechen oder Absperren beziehungsweise zum Erzeugen des Flüssigkeitsstroms ebenso wie die drahtlose Kommunikation zwischen dem entsprechenden Steuerungssystem und einem externen Rechensystem in einem elektrischen Energiespeicher gebündelt, der insbesondere zur elektrischen Energieversorgung des zum Erzeugen des Flüssigkeitsstroms verwendeten Pumpenmotors dient.

### BEZUGSZEICHENLISTE:

- 1: Bewässerungsanlage
- 2: Steuerungssystem
- 3: Wasserverteilungsvorrichtung
- 4: Zuflussanschluss
- 5: Abflussanschluss
- 6: Pumpenmotor
- 8: Energiespeicher
- 9: Kommunikationsvorrichtung
- 10: Rechensystem
- 11: Steuerschaltkreis
- 12: Energiespeicherzelle
- 13: Pumpengehäuse
- 14: Energiespeichergehäuse
- 15: Schnittstelle
- 16: Schnittstelle

## Patentansprüche

1. Steuerungssystem (2) für eine Bewässerungsanlage (1), das Steuerungssystem (2) aufweisend
- einen Zuflussanschluss (4) und einen Abflussanschluss (5);
- eine Pumpe mit einem elektrisch steuerbaren Pumpenmotor (6), der dazu eingerichtet ist, Flüssigkeit von dem Zuflussanschluss (4) zu dem Abflussanschluss (5) zu pumpen;
- einen Steuerschaltkreis (11), der dazu eingerichtet ist, einen Steuerbefehl zu erhalten und den Pumpenmotor (6) abhängig von dem Steuerbefehl zu aktivieren oder zu deaktivieren;
- ein Pumpengehäuse (13), innerhalb dessen die Pumpe angeordnet ist; und
- einen elektrischen Energiespeicher (8) aufweisend wenigstens eine elektrische Energiespeicherzelle (12), die zur Energieversorgung mit dem Steuerschaltkreis verbunden ist, wobei der Energiespeicher (8) ein von dem Pumpengehäuse (13) lösbares Energiespeichergehäuse (14) aufweist, innerhalb dessen die wenigstens eine elektrische Energiespeicherzelle (12) angeordnet ist;
wobei
- das Steuerungssystem (2) eine erste Schnittstelle (15) aufweist, die an dem Pumpengehäuse (13) angeordnet ist;
- der Energiespeicher (8) eine zweite Schnittstelle (16) aufweist, die an dem Energiespeichergehäuse (14) angeordnet ist; und
- die erste Schnittstelle (15) und die zweite Schnittstelle (16) kompatibel zueinander ausgebildet sind, sodass das Energiespeichergehäuse (14) über die erste Schnittstelle (15) und die zweite Schnittstelle (16) mechanisch und elektrisch mit dem Pumpengehäuse (13) verbindbar ist.

2. Steuerungssystem (2) nach Anspruch 1, wobei der Energiespeicher (8)
- eine Kommunikationsvorrichtung (9) aufweist, die zur drahtlosen Kommunikation mit einem externen Rechensystem (10) eingerichtet ist; und
- den Steuerschaltkreis (11) enthält, wobei der Steuerschaltkreis (11) dazu eingerichtet ist, den Steuerbefehl über die Kommunikationsvorrichtung (9) zu erhalten.

3. Steuerungssystem (2) nach Anspruch 1, wobei der Steuerschaltkreis (11) außerhalb des Energiespeichergehäuses (14) angeordnet ist.

4. Steuerungssystem (3) nach Anspruch 3, wobei
- der Energiespeicher (8) eine Kommunikationsvorrichtung (9) aufweist, die zur drahtlosen Kommunikation mit einem externen Rechensystem (10) eingerichtet ist; und
- der Steuerschaltkreis (11) dazu eingerichtet ist, den Steuerbefehl über die Kommunikationsvorrichtung (9) zu erhalten.

5. Steuerungssystem (3) nach Anspruch 3, wobei
- das Steuerungssystem (3) eine Kommunikationsvorrichtung (9) aufweist, die außerhalb des Energiespeichergehäuses (14) angeordnet ist und zur drahtlosen Kommunikation mit einem externen Rechensystem (10) eingerichtet ist; und
- der Steuerschaltkreis (11) dazu eingerichtet ist, den Steuerbefehl über die Kommunikationsvorrichtung (9) zu erhalten.

6. Steuerungssystem (2) nach einem der vorhergehenden Ansprüche, wobei der Energiespeicher (8) als Wechselakkupack, insbesondere als Systemakkupack, ausgestaltet ist.

7. Bewässerungsanlage (1) zur automatischen Bewässerung einer Fläche aufweisend
- ein Steuerungssystem (2) nach einem der vorhergehenden Ansprüche; und
- eine Wasserverteilungsvorrichtung (3), die mit dem Abflussanschluss (5) gekoppelt ist, um bei aktiviertem Pumpenmotor (6) Wasser auf die Fläche auszubringen.

8. Bewässerungsanlage (1) nach Anspruch 7, aufweisend ein zu dem Steuerungssystem (2) externes Rechensystem (10), wobei
- das Steuerungssystem (2) und/oder die Wasserverteilungsvorrichtung (3) und/oder das externe Rechensystem (10) dazu eingerichtet ist, einen Standort der Fläche zu bestimmen; und
- das externe Rechensystem (10) dazu eingerichtet ist,
- automatisch Wetterdaten für den Standort zu erfassen;
- unter Verwendung eines vorgegebenen Modells zur Bestimmung einer auszubringenden Wassermenge abhängig von den Wetterdaten einen Wasserbedarf für die Fläche zu bestimmen;
- ein Steuersignal abhängig von dem bestimmten Wasserbedarf zu erzeugen; und
- das Steuersignal zur Übertragung eines Steuerbefehls drahtlos an das Steuerungssystem (2) zu übermitteln.

## Claims

1. Control system (2) for an irrigation system (1), the control system (2) comprising
- an inflow port (4) and an outflow port (5);
- a pump with an electrically controllable pump motor (6) which is adapted to adapted to pump liquid from the inflow port (4) to the outflow port (5).
- a control circuit (11) adapted to receive a control command and to control the pump motor (6) in response to the control command and to activate or deactivate the pump motor (6) in response to the control command;
- a pump housing (13) within which the pump is disposed; and
- an electrical energy storage device (8) comprising at least an electrical energy storage cell (12) connected to the control circuit for power supply, wherein the energy storage device (8) comprises an energy storage housing (14) detachable from the pump housing (13), within which the at least one electrical energy storage cell (12) is arranged;
wherein
- the control system (2) comprises a first interface (15) arranged at the pump housing (13);
- the energy storage device (8) comprises a second interface (16) arranged at the energy storage housing (14); and
- the first interface (15) and the second interface (16) are formed to be compatible with each other, so that the energy storage housing (14) can be connected with the pump housing (13) mechanically and electrically via the first interface (15) and the second interface (16).

2. Control system (2) according to claim 1, wherein the energy storage device (8)
- comprises a communication device (9) adapted to communicate wirelessly with an external computing system (10); and
- comprises the control circuit (11), wherein the control circuit (11) is adapted to receive the control command via the communication device (9).

3. Control system (2) according to claim 1, wherein the control circuit (11) is arranged outside the energy storage housing (14).

4. Control system (3) according to claim 3, wherein.
- the energy storage device (8) comprises a communication device (9) adapted for wireless communication with an external computing system (10); and
- the control circuit (11) is adapted to receive the control command via the communication device (9).

5. Control system (3) according to claim 3, wherein
- the control system (3) comprises a communication device (9) arranged outside the energy storage housing (14) and arranged for wireless communication with an external computing system (10); and
- the control circuit (11) is adapted to receive the control command via the communication device (9).

6. Control system (2) according to any one of the preceding claims, wherein the energy storage device (8) is configured as an exchangeable battery pack, in particular as a system battery pack.

7. Irrigation system (1) for automatic irrigation of an area comprising
- a control system (2) according to one of the preceding claims; and
- a water distribution device (3) coupled to the outflow port (5) to apply water to the area when the pump motor (6) is activated.

8. Irrigation system (1) according to claim 7, comprising a computing system (10) external to the control system (2), wherein
- the control system (2) and/or the water distribution device (3) and/or the external computing system (10) is adapted to determine a location of the area; and
- the external computing system (10) is adapted to,
- automatically acquire weather data for the location
- determine a water demand for the area depending on the weather data by using a predetermined model for determining an amount of water to be applied;
- generate a control signal depending on the determined water demand; and
- transmit the control signal wirelessly to the control system (2) for transmitting a control command.

## Revendications

1. Système de commande (2) destiné à une installation d'irrigation (1), le système de commande (2) présentant
- un raccordement d'arrivée (4) et un raccordement d'évacuation (5) ;
- une pompe pourvue d'un moteur de pompe (6) à commande électrique qui est conçu pour pomper un liquide du raccordement d'arrivée (4) au raccordement d'évacuation (5) ;
- un circuit de commande (11) qui est conçu pour recevoir une instruction de commande et pour activer ou désactiver le moteur de pompe (6) en fonction de l'instruction de commande ;
- un carter de pompe (13) à l'intérieur duquel est disposée la pompe ; et
- un accumulateur d'énergie électrique (8) présentant au moins une cellule d'accumulation d'énergie électrique (12) qui est reliée au circuit de commande pour l'alimentation en énergie, dans lequel l'accumulateur d'énergie (8) présente un carter d'accumulateur d'énergie (14) amovible du carter de pompe (13) et à l'intérieur duquel est disposée ladite au moins une cellule d'accumulation d'énergie électrique (12) ;
dans lequel
- le système de commande (2) présente une première interface (15) qui est disposée sur le carter de pompe (13) ;
- l'accumulateur d'énergie (8) présente une deuxième interface (16) qui est disposée sur le carter d'accumulateur d'énergie (14) ; et
- la première interface (15) et la deuxième interface (16) sont réalisées de manière compatible entre elles de sorte que le carter d'accumulateur d'énergie (14) peut être relié mécaniquement et électriquement au carter de pompe (13) par l'intermédiaire de la première interface (15) et de la deuxième interface (16).

2. Système de commande (2) selon la revendication 1, dans lequel l'accumulateur d'énergie (8)
- présente un dispositif de communication (9) qui est conçu pour la communication sans fil avec un système de calcul externe (10) ; et
- comporte le circuit de commande (11) dans lequel le circuit de commande (11) est conçu pour recevoir l'instruction de commande par l'intermédiaire du dispositif de communication (9).

3. Système de commande (2) selon la revendication 1, dans lequel le circuit de commande (11) est disposé à l'extérieur du carter d'accumulateur d'énergie (14).

4. Système de commande (3) selon la revendication 3, dans lequel
- l'accumulateur d'énergie (8) présente un dispositif de communication (9) qui est conçu pour la communication sans fil avec un système de calcul externe (10) ; et
- le circuit de commande (11) est conçu pour recevoir l'instruction de commande par l'intermédiaire du dispositif de communication (9).

5. Système de commande (3) selon la revendication 3, dans lequel
- le système de commande (3) présente un dispositif de communication (9) qui est disposé à l'extérieur du carter d'accumulateur d'énergie (14) et est conçu pour la communication sans fil avec un système de calcul externe (10) ; et
- le circuit de commande (11) est conçu pour recevoir l'instruction de commande par l'intermédiaire du dispositif de communication (9).

6. Système de commande (2) selon l'une quelconque des revendications précédentes, dans lequel l'accumulateur d'énergie (8) est configuré sous forme de bloc d'accumulateur échangeable, en particulier de bloc d'accumulateur de système.

7. Installation d'irrigation (1) permettant d'irriguer automatiquement une surface, présentant
- un système de commande (2) selon l'une quelconque des revendications précédentes ; et
- un dispositif de distribution d'eau (3) qui est couplé au raccordement d'évacuation (5) pour évacuer l'eau sur la surface lorsque le moteur de pompe (6) est activé.

8. Installation d'irrigation (1) selon la revendication 7, présentant un système de calcul (10) externe par rapport au système de commande (2), dans lequel
- le système de commande (2) et/ou le dispositif de distribution d'eau (3) et/ou le système de calcul externe (10) sont conçus pour déterminer un lieu de la surface ; et
- le système de calcul externe (10) est conçu pour
- détecter automatiquement des données météorologiques pour le lieu ;
- en utilisant un modèle prédéfini pour la détermination d'une quantité d'eau à épandre en fonction des données météorologiques, déterminer un besoin en eau pour la surface ;
- générer un signal de commande en fonction du besoin en eau déterminé ; et
- communiquer le signal de commande pour la transmission sans fil d'une instruction de commande au système de commande (2).
